(19) Europäisches Patentamt
European Patent Office
Office européen des brevets

(11) Veröffentlichungsnummer: **0 057 834**
**B1**

(12) # EUROPÄISCHE PATENTSCHRIFT

(45) Veröffentlichungstag der Patentschrift: **06.06.84**

(21) Anmeldenummer: **82100405.8**

(22) Anmeldetag: **21.01.82**

(51) Int. Cl.³: **C 07 C 69/52,** C 09 D 3/81, C 08 G 83/00, C 08 L 51/08, C 08 L 67/06, C 07 C 67/03, C 07 C 67/08, C 07 C 67/10

(54) **Acryl- und Methacrylsäurederivate des 5,6-Dihydro-dicyclopentadiens, Verfahren zu ihrer Herstellung und Verwendung als Reaktivverdünner.**

(30) Priorität: **31.01.81 DE 3103252**

(43) Veröffentlichungstag der Anmeldung: **18.08.82 Patentblatt 82/33**

(45) Bekanntmachung des Hinweises auf die Patenterteilung: **06.06.84 Patentblatt 84/23**

(84) Benannte Vertragsstaaten: **AT DE FR GB IT NL**

(56) Entgegenhaltungen:
**DE - A - 2 825 627**
**DE - A - 2 825 737**
**US - A - 4 117 030**

(73) Patentinhaber: **BAYER AG, Konzernverwaltung RP Patentabteilung, D-5090 Leverkusen 1 Bayerwerk (DE)**

(72) Erfinder: **Reuter, Knud, Dr., Buschstrasse 149, D-4150 Krefeld (DE)**
Erfinder: **Eimers, Erich, Dr., Kreuzbergstrasse 136, D-4150 Krefeld (DE)**
Erfinder: **Dhein, Rolf, Dr., Deswatinesstrasse 30, D-4150 Krefeld (DE)**
Erfinder: **Fuhr, Karl, Dr., Kruellsdyk 55, D-4150 Krefeld (DE)**
Erfinder: **Fleiter, Lothar, Dr., Baerenstrasse 7, D-4150 Krefeld (DE)**
Erfinder: **Kreiss, Eberhard, Ing.grad., Rather Strasse 22, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 057 834 B1

BUNDESDRUCKEREI BERLIN

**Beschreibung**

Die Erfindung betrifft Acryloyl- bzw. Methacrylolgruppen enthaltende Ester des 5,6-Dihydrodicyclopentadienols

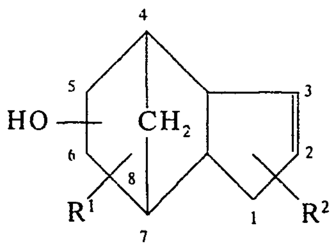

(I)

worin $R^1$, $R^2$ ein Wasserstoffatom oder eine Methylgruppe bedeuten, ein Verfahren zur Herstellung dieser Ester und die Verwendung von Acryloyl- bzw. Methacryloylgruppen-haltigen Estern des 5,6-Dihydrodicyclopentadienols als Reaktivverdünner für radikalisch vernetzbare Lacksysteme.

Reaktivverdünner sind niedrigviskose Stoffe, die harzartige Bindemittel verdünnen und dadurch dem Lack bei erhöhtem Festkörpergehalt die zu seiner Applikation notwendige Viskosität verleihen, zur Vernetzung mit dem Lackharz befähigte funktionelle Gruppen enthalten und beim Härtungsvorgang Bestandteil des gehärteten Lackfilms werden.

Alloocimen, ein derartiger Reaktivverdünner, ist bereits seit einiger Zeit auf dem Markt, wegen seines auch in vielfacher Verdünnung intensiven unangenehmen Geruchs und seiner relativ hohen Flüchtigkeit aber nur begrenzt anwendbar.

Auch Derivate des 5,6-Dihydrodicyclopentadienols (I) sind als Reaktivverdünner empfohlen worden (DE-OS 28 25 627, 28 25 737, US-PS 40 97 677). Ein Nachteil dieser Verbindungen in Kombination mit oxidativ vernetzbaren Bindemitteln ist ihre bei Wärmetrocknung besonders ausgeprägte Tendenz zur Bildung runzeliger Lackfilme.

Für strahlenhärtbare Acrylharze sind bereits Mono- und Oligoester der (Meth)Acrylsäure als Reaktivverdünner bekannt. Speziell zur Herstellung von Überzügen auf flexiblen Untergründen oder zur Herstellung von Fußbodenlacken werden z. B. Glykol- und Diglykolether-acrylate sowie 2-Ethyl-2-hydroximethyldioxan-1,3-acrylat angewandt. Ein Nachteil dieser Verdünner ist es, daß die damit erhaltenen Überzüge eine unzureichende Reiß- und Abriebfestigkeit aufweisen.

Reaktivverdünner sollen sehr vielfältige Forderungen erfüllen: Mischungen von Reaktivverdünnern und lufttrocknenden Alkydharzen sollen z. B. hochreaktiv sein, aber auch in dickeren Schichten noch ohne zu runzeln trocknen; Mischungen von Reaktivverdünnern und ungesättigten Polyesterharzen sollen kratzfeste Überzüge ergeben, und Mischungen von Reaktivverdünnern und Acrylharzen sollen bei ausreichender Flexibilität zu reiß- und abriebfesten Beschichtungen führen. Außerdem sollen Reaktivverdünner möglichst geruchlos und schwerflüchtig sein.

Überraschenderweise lassen sich mit den beanspruchten Acryloyl- und Methacryloylderivaten des 5,6-Dihydrodicyclopentadienols (I) die geforderten Eigenschaften erzielen, ohne daß die Nachteile der bekannten Reaktivverdünner in Kauf genommen werden müssen.

Gegenstand der Erfindung ist die Verwendung von Verbindungen der Formel

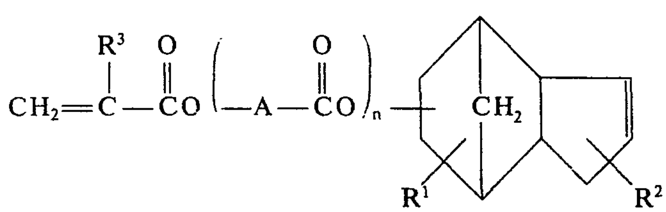

(II)

worin

$R^1$, $R^2$ die oben angegebene Bedeutung haben,

$R^3$ für ein Wasserstoffatom oder eine Methylgruppe,

A für einen gegebenenfalls verzweigten Alkylenrest mit 1 bis 17 C-Atomen oder einen gegebenenfalls verzweigten Alkenylenrest mit 2 bis 17 C-Atomen und

n für eine ganze Zahl von 1 bis 5, vorzugsweise 1 bis 3, insbesondere 1 stehen, als Reaktivverdünner für radikalisch vernetzbare Lacksysteme.

Weiterer Gegenstand der Erfindung sind Verbindungen der Formel II mit Ausnahme der Verbindungen, in denen A

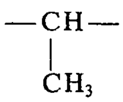

und gleichzeitig n 1 bedeuten.

Die Verknüpfung der Estergruppe mit dem Dicyclopentadienylrest kann in Position 5 oder 6 erfolgt sein.

Bevorzugte Verbindungen entsprechen der Formel II, worin $R^1$, $R^2$ und $R^3$ ein Wasserstoffatom oder eine Methylgruppe, n die Zahl 1 und A den Rest

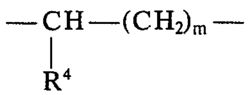

bedeuten, wobei

$R^4$ für ein Wasserstoffatom oder einen gegebenenfalls verzweigten $C_1$–$C_{16}$-Alkylrest und
m für Null oder eine ganze Zahl von 1 bis 16 stehen mit der Maßgabe, daß die Summe aus m und der Zahl der C-Atome von $R^4$ eine ganze Zahl von 1 bis 16 ist, mit Ausnahme der Verbindungen, in denen $R^4$ $CH_3$ und m gleichzeitig O bedeuten.

Besonders bevorzugte Verbindungen entsprechen der Formel II, worin

$R^1$, $R^2$
und $R^3$ ein Wasserstoffatom oder eine Methylgruppe,
n 1 und
A $(CH_2)_x$

bedeuten, wobei x für eine ganze Zahl von 1 bis 17 steht.

Die bevorzugtesten Verbindungen (II) seien namentlich bzw. formelmäßig aufgeführt:

Acryl- und Methacrylsäureester des Glykolsäure-5,6-dihydrodicyclopentadienylesters:

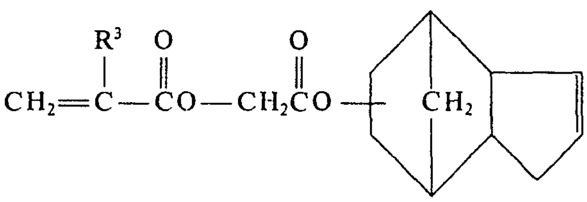
(III)

Acryl- und Methacrylsäureester des Hydracrylsäure-5,6-dihydrodicyclopentadienylesters:

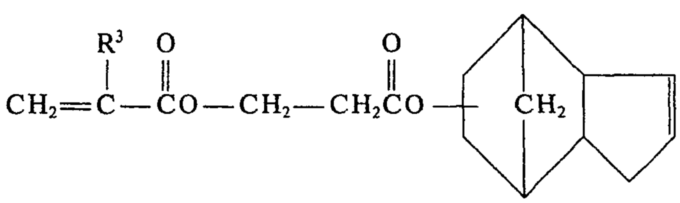
(IV)

Acryl- und Methacrylsäureester des Milchsäure-5,6-dihydrodicyclopentadienylesters:

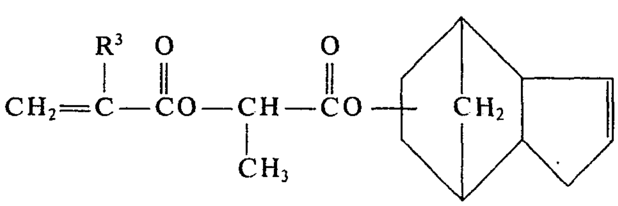
(V)

(Stoff als solcher nicht beansprucht; aus US 41 17 030 bekannt);

Acryl- und Methacrylsäureester des 2-, des 3- und des 4-Hydroxibuttersäure-5,6-dihydrodicyclopentadienylesters,
Acryl- und Methacrylsäureester des 2-Hydroxi-isobuttersäure-5,6-dihydrodicyclopentadienylesters:

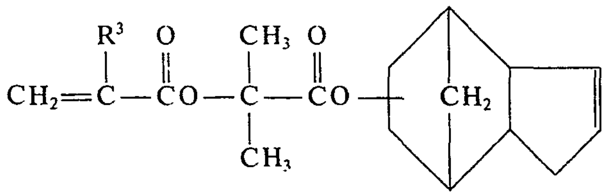

(VI)

Acryl- und Methacrylsäureester des 2-Hydroxi-2-methylbuttersäure-5,6-dihydrodicyclopentadienylesters:

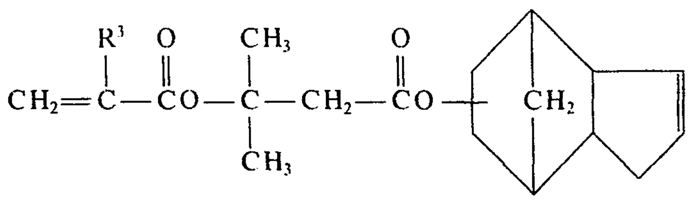

(VII)

Acryl- und Methacrylsäureester des 4- und des 5-Hydroxivaleriansäure-5,6-dihydrodicyclopentadienylesters;
Acryl- und Methacrylsäureester des 6-Hydroxicapronsäure-5,6-dihydrodicyclopentadienylesters;

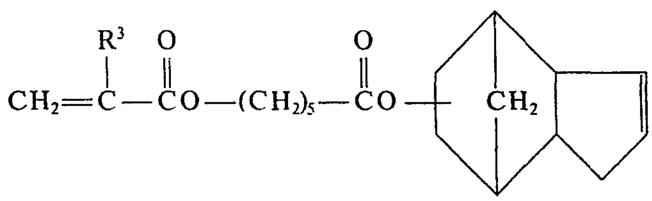

(VIII)

Acryl- und Methacrylsäureester des 4-Hydroxicapryl- und des 4-Hydroxicaprinsäure-5,6-dihydrodicyclopentadienylesters;
Acryl- und Methacrylsäureester des 12-Hydroxilaurinsäure-5,6-dihydrodicyclopentadienylesters;
Acryl- und Methacrylsäureester des 16-Hydroxipalmitinsäure-5,6-dihydrodicyclopentadienylesters;
Acrylsäure- und Methacrylsäureester des 12-Hydroxistearinsäure-5,6-dihydrodicyclopentadienylesters:

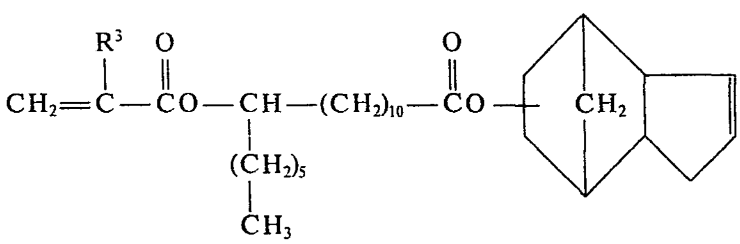

(IX)

Acryl- und Methacrylsäureester des Ricinolsäure-5,6-dihydrodicyclopentadienylesters:

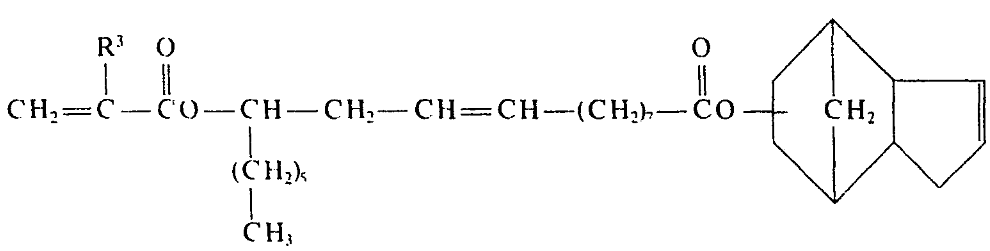

(X)

Weiterer Gegenstand der Erfindung ist ein Verfahren zur Herstellung der Verbindungen der Formel II – ausgenommen solche, in denen A =

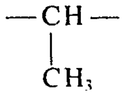

und gleichzeitig n = 1, dadurch gekennzeichnet, daß man entweder

a) Acryl- bzw. Methacrylsäure, ihre Alkalisalze, Chloride oder Methylester mit Estern der Formel

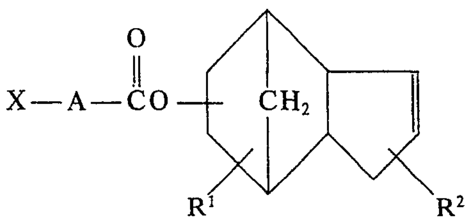

(XI)

worin $R^1$, $R^2$ und A die oben angegebene Bedeutung haben und X für OH oder Halogen, vorzugsweise Chlor, steht, oder

b) Acryl- bzw. Methacrylsäureester der Formel

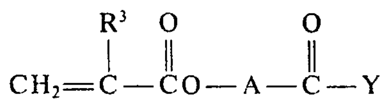

(XII)

worin $R^3$ und A die oben angegebene Bedeutung haben und Y für OH, $OCH_3$ oder Halogen, vorzugsweise Chlor steht,
mit dem 5,6-Dihydrodicyclopentadienol (I) oder

c) Acryl- bzw. Methacrylsäureester der Formel

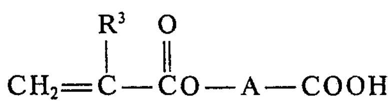

(XIII)

worin $R^3$ und A die oben angegebene Bedeutung haben,
mit einem Dicyclopentadien der Formel

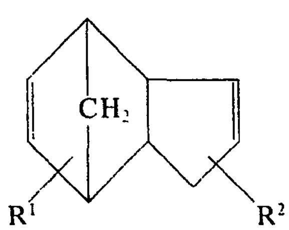

(XIV)

umsetzt.

Die Veresterungen bzw. Umesterungen können unter für solche Reaktionen üblichen Bedingungen durchgeführt werden; vgl. z. B. Methoden der Organischen Chemie (Houben–Weyl), 4. Aufl., Bd. VIII, 516–531, 541–543, Georg Thieme Verlag, Stuttgart 1952. Die Verfahrensvariante a) wird – soweit X für Halogen steht – vorzugsweise durch Zusatz basischer Verbindungen, z. B. durch Amine, katalysiert (Chem. Abstracts 69, 43 468 a; GB-PS 12 42 890); die Verfahrensvariante b) – soweit Y = OH – und die Verfahrensvariante c) erfolgen am besten unter saurer Katalyse (US-PS 23 95 452, 24 14 089).

Besonders einfach gestaltet sich die Herstellung der Verbindungen der Formel

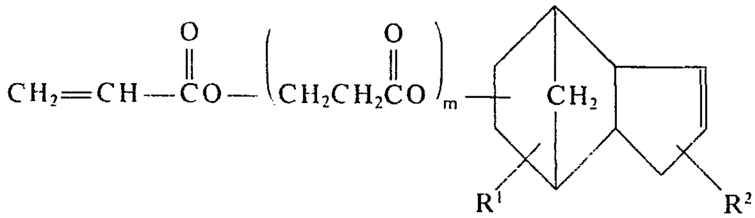

(XV)

worin m eine ganze Zahl von 1 bis 5 bedeutet. Verbindungen der Formel

$$CH_2{=}CH{-}COO{-}(CH_2CH_2COO)_mH \qquad (XVI)$$

lassen sich bekanntlich durch Erhitzen von Acrylsäure in Gegenwart von Polymerisationsinhibitoren leicht herstellen (DE-OS 28 00 357). Die so erhaltenen »dimeren« bzw. »oligomeren« Acrylsäuren oder ihre Gemische können in Gegenwart saurer Katalysatoren glatt an Dicyclopentadiene angelagert werden. Das Molverhältnis »dimere« bzw. »oligomere« Acrylsäure/Dicyclopentadien im Reaktionsgemisch beträgt vorzugsweise 1 : 1 bis 3 : 1, insbesondere 1,5 : 1 bis 2 : 1. Die Reaktionstemperatur beträgt vorzugsweise 50—150, insbesondere 60—80, °C.

Die erfindungsgemäß als Reaktivverdünner zu verwendenden Verbindungen eignen sich hervorragend als Zusätze für lufttrocknende Alkydharze. Im Gegensatz zu Alkydharzen, die die erfindungsgemäßen Reaktivverdünner enthalten, führen Alkydharze, die die in den US-PS 40 97 677, 41 45 503 und DE-OS 28 25 737 beschriebenen Ether der Formel

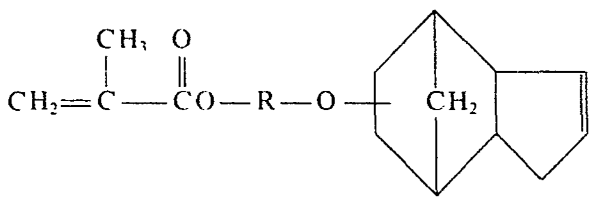

(XVII)

enthalten, bereits bei geringen Schichtdicken zu runzeligen Beschichtungen.

»Lufttrocknende Alkydharze« sind Polyester, die mit halbtrocknenden oder trocknenden Ölen oder deren Fettsäuren modifiziert sind; vgl. Ullmanns Encyklopädie der technischen Chemie, 4. Aufl., Bd. 15, 616—625, Verlag Chemie, Weinheim 1978. Unter »Polyestern« versteht man durch Polykondensation nach bekannten Verfahren aus Alkoholen und Carbonsäuren hergestellte Polykondensate der Art, wie sie z. B. in Römpps Chemielexikon, Band 1, S. 202, Franckh'sche Verlagsbuchhandlung, Stuttgart 1966, definiert oder in Ullmanns Encyklopädie der Technischen Chemie und in D. H. Solomon, The Chemistry of Organic Filmformers, S. 75—101, Robert E. Krieger Pub. Co., New York 1977, beschrieben sind.

Für die Synthese dieser Polyester bzw. Alkydharze bevorzugte Alkohole sind aliphatische, cycloaliphatische und/oder araliphatische Alkohole mit 1—15, vorzugsweise 2—6 C-Atomen, und 1—6, vorzugsweise 1—4, an nicht-aromatische C-Atome gebundenen OH-Gruppen pro Molekül, z. B. Glykole wie Ethylenglykol, Propandiol-1,2 und -1,3, Butandiol-1,2, -1,3 und -1,4, 2-Ethylpropandiol-1,3, 2-Ethylhexandiol-1,3, Neopentylglykol, Hexandiol-1,6, Cyclohexandiol-1,2 und -1,4, 1,2- und 1,4-Bis-(hydroximethyl)-cyclohexan, Adipinsäure-bis-(ethylenglykolester); Etheralkohole wie Di- und Triethylenglykol, Dipropylenglykol; oxethylierte und perhydrierte Bisphenole; Butantriol-1,2,4, Hexantriol-1,2,6, Trimethylolethan, Trimethylolpropan, Glycerin, Pentaerythrit, Dipentaerythrit, Mannit und Sorbit; kettenabbrechende einwertige Alkohole mit 1 bis 7 Kohlenstoffatomen wie Propanol, Butanol, Cyclohexanol und Benzylalkohol. Die gebräuchlichsten Alkohole sind Glycerin, Trimethylolpropan, Neopentylglykol und Pentaerythrit.

Für die Synthese der Polyester bzw. Alkydharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Endomethylentetrahydrophthalsäure, Bernsteinsäure, Adipinsäure, Sebacinsäure, Trimellithsäure und Trimellithsäureanhydrid, Pyromellithsäureanhydrid und Maleinsäure. Phthalsäureanhydrid ist die gebräuchlichste Säurekomponente.

Für die Herstellung der Polyester bzw. Alkydharze bevorzugte Monocarbonsäuren sind aliphatische, cycloaliphatische gesättigte und ungesättigte und/oder aromatische Monocarbonsäuren mit 3—24 C-Atomen pro Molekül wie Benzoesäure, p-tert.-Butylbenzoesäure, Tolylsäure, Hexahydrobenzoesäure, Abietinsäure und Milchsäure.

Die Öllänge der Alkydharze, berechnet als Triglycerid und bezogen auf das Alkydharz, kann 5 bis 80, vorzugsweise 20 bis 70 Gew.-% betragen. Die trocknenden oder halbtrocknenden Fettsäuren, die im allgemeinen 6 bis 24 C-Atome enthalten, können entweder als solche oder in Form ihrer Glycerinester (Triglyceride) eingesetzt werden.

Als bevorzugt sind pflanzliche und tierische Öle, Fette oder Fettsäuren zu nennen, wie z. B. Sonnenblumen-, Erdnuß-, Ricinen-, Holz-, Oliven-, Sojabohnen-, Oiticica-, Lein-, Baumwollsaat-, Safflorölоder -ölfettsäuren, dehydratisiertes Ricinusöl bzw. -fettsäure, einfach ungesättigte Fettsäuren, Schmalz, Talg und Trane, Tallölfettsäure sowie synthetische Fettsäuren, die durch Konjugierung oder Isomerisierung aus natürlichen ungesättigten Ölen oder Fettsäuren hergestellt sein können.

Unter »lufttrocknenden Alkydharzen« sollen hier auch solche mit trocknenden oder halbtrocknenden Ölen oder Fettsäuren modifizierte Polyester verstanden werden, die vorzugsweise (mit oder ohne Aminoplastharzen) eingebrannt werden.

Das als Zahlenmittel bestimmte Molekulargewicht der Alkydharze beträgt 2000—10 000 (bis zu Molekulargewicht von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch in Aceton bestimmt).

Als Reaktivverdünner für lufttrocknende Alkydharze eignen sich besonders gut die Verbindungen II, in denen $R^3$ eine Methylgruppe bedeutet. Der Gehalt an Reaktivverdünner, bezogen auf die Summe von lufttrocknendem Alkydharz und Reaktivverdünner, liegt in der Regel zwischen 5 und 50, vorzugsweise 15 und 40, Gew.-%.

Ungesättigte Polyesterharze, die die erfindungsgemäß zu verwendenden Verbindungen II enthalten, führen zu besonders kratzfesten Beschichtungen. Unter »ungesättigten Polyesterharzen« versteht man Mischungen $\alpha,\beta$-ethylenisch ungesättigter Polyester in damit copolymerisierbaren ungesättigten Monomeren, wobei das Polyester/Monomer-Gewichtsverhältnis in der Regel zwischen 3 : 7 und 7 : 3 liegt. Die ungesättigten copolymerisierbaren Monomeren können ganz oder teilweise durch die Verbindungen II ersetzt werden.

Bevorzugte $\alpha,\beta$-ungesättigte Polyester sind die üblichen Polykondensationsprodukte mindestens einer $\alpha,\beta$-ethylenisch ungesättigten Dicarbonsäure mit in der Regel 4 oder 5 C-Atomen oder deren esterbildenden Derivate, z. B. ihrer Anhydride, gegebenenfalls in Abmischung mit bis zu 200 Mol-%, bezogen auf die ungesättigten Säurekomponenten, mindestens einer aliphatischen, aromatischen oder cycloaliphatischen Dicarbonsäure mit 4—10 C-Atomen oder deren esterbildenden Derivate mit mindestens einer Polyhydroxiverbindung, insbesondere Dihydroxiverbindung mit 2—8 C-Atomen — also ungesättigte Polyester, wie sie bei J. Björksten et al., »Polyesters and their Applications«, Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z. B. jedoch auch Mesaconsäure, Citraconsäure, Itaconsäure oder Chlormaleinsäure. Beispiele für die zu verwendenden aromatischen, aliphatischen gesättigten und cycloaliphatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z. B. Hexachlorendomethylen-tetrahydrophthalsäure, Tetrachlorphthalsäure oder Tetrabromphthalsäure verwendet werden. Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis-(4-hydroxicyclohexyl)-propan, bis-oxalkyliertes Bisphenol A und andere eingesetzt werden. Bevorzugt verwendet werden Ethylenglykol, Propandiol-1,2, Diethylenglykol und Dipropylenglykol.

Weitere Modifikationen sind möglich durch Einbau ein-, drei- und vierwertiger Alkohole mit 1—7 C-Atomen, wie Methanol, Ethanol, Butanol, Allylalkohol, Benzylalkohol, Cyclohexanol und Tetrahydrofurfurylalkohol, Trimethylolpropan, Glycerin und Pentaerythrit, von Mono-, Di- und Triallylethern und Benzylethern drei und mehrwertiger Alkohole mit 3—6 C-Atomen gemäß DE-AS 10 24 654, z. B. Trimethylolpropandiallylether, sowie durch Einbau einbasischer Säuren wie Benzoesäure oder Acrylsäure.

Die Säurezahlen der ungesättigten Polyester liegen gewöhnlich zwischen 1 und 100, vorzugsweise zwischen 1 und 40, die OH-Zahlen zwischen 10 und 150, vorzugsweise zwischen 20 und 100, und die als Zahlenmittel bestimmten Molekulargewichte $\overline{M}_n$ zwischen ca. 300 und 5000, vorzugsweise zwischen ca. 400 und 3000 (dampfdruckosmometrisch gemessen in Dioxan und Aceton; bei differierenden Werten wird der niedrigere als der korrekte angesehen).

Als mit den ungesättigten Polyestern copolymerisierbare ungesättigte Monomere, die neben den erfindungsgemäß zu verwendenden Verbindungen II mitverwendet werden können, eignen sich in der Polyestertechnologie gebräuchliche ungesättigte Verbindungen, die bevorzugt $\alpha$-substituierte Vinyl- oder Vinylidengruppen oder $\beta$-substituierte Allylgruppen tragen, bevorzugt Styrol; aber auch beispielsweise kernchlorierte und -alkylierte bzw. -alkenylierte Styrole, wobei die Alkylgruppen 1—4 Kohlenstoffatome enthalten, können, z. B. Vinyltoluol, Divinylbenzol, $\alpha$-Methylstyrol, tert.-Butylstyrol, Chlorstyrole; Vinylester von Carbonsäuren mit 2—6 Kohlenstoffatomen, bevorzugt Vinylacetat, Vinylpropio-

nat, Vinylbenzoat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1–4 Kohlenstoffatomen in der Alkoholkomponente, ihre Amide und Nitrile, Maleinsäureanhydrid, -halb- und -diester mit 1–4 Kohlenstoffatomen in der Alkoholkomponente, -halb- und -diamide oder cyclische Imide wie Butylacrylat, Methylmethacrylat, Acrylnitril, N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Mischungen aus Acrylharzen und den erfindungsgemäß zu verwendenden Verbindungen II ergeben äußerst reiß- und abriebfeste Beschichtungen. Unter dem Begriff »Acrylharze« sollen in diesem Zusammenhang Verbindungen verstanden werden, die mindestens 20 Gew.-% Reste von Acryl- oder Methacrylsäure oder deren Derivaten in polymerisierter bzw. copolymerisierter Form enthalten. Für diesen Zweck sind besonders diejenigen Verbindungen II bevorzugt, in denen $R^3$ ein Wasserstoffatom bedeutet.

»Acrylharze« in diesem Sinne sind Urethan(meth)acrylate, d. h. Umsetzungsprodukte aus A) Di- und Polyisocyanaten, aus deren Präpolymeren mit Polyolen, Thiopolyolen, Polyetherpolyolen, Polyesterpolyolen oder aus biuretisierten Polyisocyanten und B) Hydroxialkylgruppen enthaltenden (Meth)Acrylaten, die gegebenenfalls eine oder mehrere der Gruppen: Ether-, Thioether-, Carboxylato- (—OOC—), Ureylen- (—NH—CO—NH—), Aminocarboxylato- (—NH—COO—)-Gruppe enthalten. Derartige Isocyanate bzw. Urethan(meth)acrylate sind beispielsweise aus der US-PS 32 97 745, GB-PS 7 43 514, US-PS 29 51 758, US-PS 33 16 189, DE-AS 16 44 797, DE-AS 16 44 798, GB-PS 11 47 732, US-PS 36 64 861, DE-OS 19 16 499, US-PS 36 00 359, US-PS 38 40 369, US-PS 37 82 961, DE-AS 21 02 382, DE-OS 25 35 503, DE-OS 20 64 079, DE-AS 23 61 041, DE-OS 23 36 264, DE-OS 28 15 721, DE-OS 27 37 406, US-PS 33 73 221, US-PS 34 78 126, DE-AS 19 34 138, DE-OS 25 57 408 bekannt.

»Acrylharze« in diesem Sinne sind weiterhin Epoxi(meth)acrylate, d. h. Umsetzungsprodukte aus Polyepoxiden mit mehr als einer 1,2-Epoxidgruppe pro Molekül und Acrylsäure und/oder Methacrylsäure. Die Polyepoxide können Kondensationsprodukte aus mehrwertigen Phenolen, Alkoholen, primären oder sekundären Aminen oder Carbonsäuren und Epihalogenhydrinen mit anschließender Dehydrohalogenierung darstellen, sie können auch (Co)Polymerisationsprodukte von 1,2-Epoxidgruppen tragenden ethylenisch ungesättigten, polymerisierbaren Monomeren sein. Auch können die Polyepoxide aus Verbindungen mit mehr als einer ethylenisch ungesättigten Doppelbindung durch Epoxidierung erhalten werden. Die Polyepoxide können als solche oder modifiziert mit Ammoniak, primären oder sekundären Aminen, Schwefelwasserstoff, Dithiolen oder Polythiolen, Dicarbonsäuren oder deren Anhydriden eingesetzt werden, wobei die Reaktanden in solchen Mengenverhältnissen verwendet werden, daß die modifizierten Polyoxide stets mehr als eine 1,2-Epoxidgruppen pro Molekül enthalten. Die Herstellung derartiger gegebenenfalls modifizierter Polyepoxide und ihre Umsetzungsprodukte mit (Meth)Acrylsäure sind beispielsweise bekannt aus US-PS 30 66 112, 32 56 226, 33 01 743, 34 69 982, DE-OS 19 21 870, GB-PS 12 41 851, DE-OS 23 49 979 = US-PS 40 14 771, DE-OS 24 29 527 = GB-PS 14 56 486, DE-PS 25 34 012 = US-PS 40 81 492, DE-OS 25 33 125 = US-PS 40 49 745.

›Acrylharze« in diesem Sinne sind weiterhin Umsetzungsprodukte aus oxethylierten Phenolen (vgl. DE-OS 29 10 714) oder Aminen mit Acrylsäure bzw. Methacrylsäure.

Der Gehalt an Reaktivverdünner, bezogen auf die Summe von Acrylharz und Reaktivverdünner, kann 5—80, vorzugsweise 10—70, Gew.-% betragen.

Selbstverständlich können zwei oder mehrere der erfindungsgemäß zu verwendenden Verbindungen als Reaktivverdünner-Gemisch eingesetzt werden. Die erfindungsgemäßen Reaktivverdünner können auch im Gemisch mit üblichen Lacklösungsmitteln, wie aromatischen Kohlenwasserstoffen oder Benzinen, oder mit bekannten (Meth)Acrylaten verwandt werden. Als solche seien genannt: Acryl- und Methacrylsäureester des Stearylalkohols, des Butylalkohols, des 2-Ethylhexanols, des Butandiols-1,4, des Hexandiols-1,6, des Diethylenglykols, des Triethylenglykols, des Trimethylolpropans, des Pentaerythrits, des Glycerins, des 2-Hydroximetilyl-2-alkyl-1,3-dioxans und der entsprechenden Ethoxilierungsprodukte.

Zur Verbesserung der Lagerstabilität können die Lacksysteme Inhibitoren, wie z. B. Hydrochinon, Hydrochinonmonomethylether, Toluhydrochinon, Trimethylhydrochinon, Benzochinon, Benzkatechin, Phenothiazin sowie Kupfersalze bzw. Komplexverbindungen von Kupfersalzen mit organischen Phosphiten oder Phosphinen enthalten.

Die Härtung der Lacksysteme, die die erfindungsgemäß zu verwendenden Reaktivverdünner enthalten, kann nach üblichen Methoden in Abhängigkeit vom verwendeten Bindemittel erfolgen:

Überzüge aus lufttrocknenden Alkydharzen können bei Raumtemperatur oder erhöhter Temperatur, z. B. 60 bis 80° C, unter Zusatz üblicher Metallsikkative wie Co, Pb, Mn, Zr, Ca, Fe in Form ihrer löslichen Salze, z. B. der 2-Ethyl-hexanoate oder der Naphthenate, gehärtet werden. Bei der Sikkativierung sollte der Reaktivverdünner wie festes Lackharz behandelt und so bei der Wahl der Metallgehalte mit berücksichtigt, also mit sikkativiert, werden.

Ungesättigte Polyesterharze, die die erfindungsgemäß zu verwendenden (Meth)-Acrylate als Monomere oder Comonomere enthalten, können nach üblichen Methoden unter Zusatz von Peroxiden oder

anderen Radikalbildnern gehärtet werden. Als Peroxide seien z. B. genannt: Ketonperoxide wie Cyclohexanonperoxid oder Methylethylketonperoxid, Polyester, wie tert.-Butylperoctoat, oder Diacylperoxide, wie z. B. Benzoylperoxid, also Verbindungen, wie sie in E. Karsten, Lackrohstofftabellen, Curt R. Vincentz Verlag Hannover, 6. Aufl., 1976, S. 420—424, genannt werden. Zur Beschleunigung des Zerfalls der peroxidischen Verbindungen werden üblicherweise Promotoren, z. B. Co in Form löslicher Salze, wie das 2-Ethylhexanoat oder das Naphthenat, oder aromatische Amine, wie z. B. N,N-Dialkylaniline oder N,N-Dialkyltoluidine, sowie gegebenenfalls Zusatzbeschleuniger, wie z. B. Acetessigester und -amide, Acetylaceton, Acetylcyclopentanon oder die aus DE-OS 24 54 325 und 26 18 860 bekannten cyclischen Zusatzbeschleuniger, zugesetzt.

Die Härtung ungesättigter Polyesterharze, die die erfindungsgemäß zu verwendenden (Meth)Acrylate als Monomer oder Comonomer enthalten, ist auch durch UV-Licht möglich. Die Härtung der mit erfindungsgemäß zu verwendenden Reaktivverdünner hergestellten Acrylharzzusammensetzungen kann mittels energiereicher Strahlung, wie Elektronen- oder Gammastrahlen, vorzugsweise durch UV-Licht, erfolgen.

Bevorzugte Photoinitiatoren sind aromatische Ketone wie Anthrachinon, β-Methylanthrachinon, tert.-Butylanthrachinon, Anthrachinoncarbonsäureester, chlorsulfonierte Xanthone und Thioxanthone, Oximester gemäß DE-OS 17 95 089, Benzophenon, Alkylbenzophenone, halogenmethylierte Benzophenone gemäß DE-OS 19 49 010, Michlers Keton, Anthron, halogenierte Benzophenone, Benzoin und seine Derivate gemäß den DE-OS 17 69 168, 17 69 853, 17 69 854, 18 07 297, 18 07 301, 19 19 678, 24 30 081 und der DE-PS 16 94 149.

Die Photoinitiatoren, die je nach Verwendungszweck der Lacksysteme in Mengen von 0,2 bis 10 Gew.-%, vorzugsweise 1—5 Gew.-%, bezogen auf strahlenhärtbare Verbindungen, eingesetzt werden, können als einzelne Substanz oder, wie häufig wegen synergistischer Effekte vorteilhaft, auch in Kombination miteinander verwendet werden.

Als Strahlenquellen zur Durchführung der Photopolymerisation können künstliche Strahler, deren Emission im Bereich von 2500—5000 Å, vorzugsweise 3000—4000 Å liegt, verwendet werden. Vorteilhaft sind Quecksilberdampf-, Xenon- und Wolframlampen, insbesondere Quecksilberhochdruckstrahler.

Für Strahlenhärtungen sind Verbindungen II, in denen $R^3$ ein Wasserstoffatom bedeutet, besonders bevorzugt.

Häufig kann es vorteilhaft sein, zur Verbesserung der filmbildenden Eigenschaften der Lacksysteme andere Harztypen mitzuverwenden. Geeignete, in der Lackindustrie gebräuchliche, Lackharze sind in den Lackrohstofftabellen von E. Karsten, 5. Auflage, Curt R. Vincentz Verlag, Hannover, 1972, Seite 74—105, 195—258, 267—293, 335—347, 357—366 beschrieben.

Den mit den erfindungsgemäß als Reaktivverdünner wirkenden Verbindungen versetzten Lacksystemen können die aus der Lackharztechnologie bekannten Hilfsstoffe, z. B. Hautverhinderungsmittel, Verlaufmittel, Thixotropiermittel, Farbstoffe, sowie Pigmente zugesetzt werden.

Die mit den erfindungsgemäß zu verwendenden Reaktivverdünnern hergestellten Lacksysteme eignen sich zur Herstellung von Überzügen (Grundierungen oder Decklackierungen) auf den verschiedensten Untergründen, wie z. B. Holz, Metall oder Kunststoffen.

Die mit den erfindungsgemäß verwendeten Reaktivverdünnern versetzten strahlenhärtbaren Lacksysteme eignen sich besonders zur Herstellung von Überzügen auf flexiblen Untergründen aus Papier, Kartonagen, Leder, Gummi, Kunststoffen, Textilien, ferner zur Herstellung von abriebfesten Fußbodenlacken.

Die in den nachfolgenden Beispielen genannten Teile sind Gewichtsteile; Prozentangaben beziehen sich auf das Gewicht.

## Beispiele

### Beispiel 1

Methacrylsäureester des Glykolsäure-5,6-dihydrodicyclopentadienylesters

a) 54 Teile Natriummethacrylat, 113,3 Teile Chloressigsäure(dihydrodicyclopentadienyl)ester, 1,5 Teile Triethylamin und 0,1 Teil Phenothiazin werden 12 Stunden auf 100° C erhitzt. Nach Abkühlen wird mit Toluol verdünnt, abfiltriert und nach Entfernen des Lösungsmittels fraktioniert. Man erhält bei 134—142° C/0,5 Torr 59 Teile des Methacrylsäureesters des Glykolsäure(dihydrodicyclopentadienyl)esters;
$n_D^{25} = 1,5000$.

b) Der Methacrylsäureester des Glykolsäure-5,6-dihydrodicyclopentadienylesters kann auch auf folgende Weise hergestellt werden:
450 Teile Dihydro-dicyclopentadienylalkohol I ($R^1$, $R^2$ = H), 138 Teile Glykolsäure (57%ige wäßrige Lösung), 10 Teile p-Toluolsulfonsäure und 300 Teile Toluol werden $9^1/_2$ Stunden am Wasserabscheider zum Rückfluß erhitzt. Nach Ende der Wasserabscheidung wird abgekühlt und mit

Natriumbicarbonat-Lösung und Wasser neutral gewaschen. Die Toluollösung wird über Natriumsulfat getrocknet und nach Abdestillation des Toluols fraktioniert.

Neben 302 Teilen Ausgangsprodukt I erhält man bei 0,1 Torr und 110–142° C 91 Teile Glykolsäure-5,6-dihydrodicyclopentadienylester.

63 Teile dieser Verbindung werden in 61 Teilen abs. Toluol mit 0,06 Teilen Phenothiazin und 0,01 Teil Hydrochinonmonomethylether gelöst. Dazu werden unter Feuchtigkeitsausschluß bei 0–5° C in 1 Stunde 31,7 Teile Methacrylsäurechlorid getropft. Zur Vervollständigung der Reaktion wird anschließend unter Rückfluß bis zum Ende der HCl-Entwicklung erhitzt. Nach Abdestillieren des Toluols wird im Hochvakuum fraktioniert. Man erhält bei 125–140° C/0,15 Torr 43 Teile des Methacrylsäureesters des Glykolsäure-5,6-dihydro-dicyclopentadienylesters;
$n_D^{21} = 1,5018$.

Aus 23 Teilen eines handelsüblichen Sojaölfettsäure-Alkydharzes mit einer Öllänge von 48% und einem Gehalt an Phthalsäureresten von 26%, 10 Teilen Xylol und 10 Teilen des oben beschriebenen Methacrylsäureesters wird ein Klarlack hergestellt, der mit Kobalt- und Bleioctoat (0,05% Co und 1% Pb, bezogen auf Summe von Alkydharz und Reaktivverdünner) sikkativiert und mit 1,5%, bezogen auf Summe von Alkydharz und Reaktivverdünner, Butanonoximlösung (55%ig in Xylol) versetzt wird.

Der mit 120 µm Naßfilmdicke auf Glasplatten aufgestrichene Klarlack ist in wenigen Stunden getrocknet, weder gerunzelt noch verfärbt und nach 1 Tag bereits sehr gut durchgetrocknet. Er zeigt die gleiche Entwicklung der Pendelhärte und der Lösungsmittelfestigkeit wie ein zum Vergleich aufgestrichener Klarlack auf Basis desselben Alkydharzes ohne Reaktivverdünner. Durch Wägung des Films wird festgestellt, daß der Reaktivverdünner zu 100% im Lackfilm verblieben ist.

## Beispiel 2

75 Teile 5,6-Dihydrodicyclopentadienol I ($R^1$, $R^2$ = H) werden mit 79,2 Teilen einer gemäß DE-OS 28 08 357 hergestellten »oligomeren Acrylsäure« (Säurezahl 350), 2 Teilen p-Toluol-sulfonsäure, 0,1 Teil Phenothiazin und 0,07 Teilen Toluhydrochinon in 200 ml Toluol gelöst und am Wasserabscheider zum Sieden erhitzt, bis 9 ml Wasser (theor. Menge) abgeschieden sind. Nach Abkühlen wird mit wäßriger Natriumhydrogencarbonat-Lösung säurefrei gewaschen, über Natriumsulfat getrocknet und nach Entfernen des Lösungsmittels fraktioniert. Man erhält 2 Hauptfraktionen:

$F_1$: 65,7 Tle. vom Sdp. 130–150°C/0,2 Torr mit $n_D^{20} = 1,5000$,
$F_2$: 98,5 Tle. vom Sdp. 150–188°C/0,2 Torr mit $n_D^{20} = 1,4950$.

$F_1 = CH_2{=}CH{-}COO{-}CH_2CH_2COO{-}$ 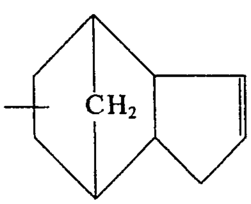

$F_2 = CH_2{=}CH{-}COO{-}CH_2{-}CH_2COOCH_2CH_2COO{-}$ 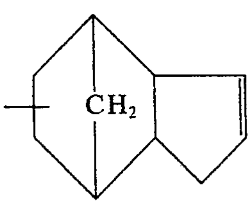

## Beispiel 3

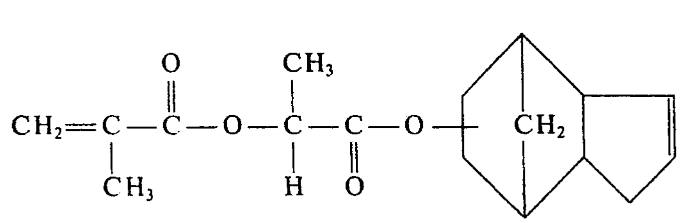

300 Teile 5,6-Dihydrodicyclopentadienol I ($R^1$, $R^2$ = H), 90 Teile Milchsäure, 4 Teile p-Toluolsulfonsäure und 174 Teile Toluol werden 1 1/2 Stunden am Wasserabscheider gekocht. Dabei scheiden sich 28 Teile Wasser ab. Die Reaktionslösung wird abgekühlt und zur Entfernung saurer Bestandteile mehrmals mit verdünnter Sodalösung und anschließend mit Wasser ausgewaschen. Die Toluollösung wird über Natriumsulfat getrocknet, vom Lösungsmittel befreit und fraktioniert.

Neben 196 Teilen Ausgangsprodukt I und 24 Teilen Rückstand erhält man 130 Teile einer Fraktion, die bei 0,3 Torr von 94—140° C siedet. Laut Gaschromatogramm enthält diese Fraktion 117,6 Teile Milchsäuredihydrodicyclopentadienylester;
$n_D^{20}$: 1,5035.

60 Teile des so erhaltenen Milchsäureesters werden in 89 Teilen Tetrahydrofuran mit 0,1 Teil Phenothiazin und 0,05 Teilen Toluhydrochinon gelöst. Dazu gibt man 24,6 Teile Triethylamin. In diese Lösung läßt man unter Feuchtigkeitsausschluß eine Lösung von 25,4 Teilen Methacrylsäurechlorid in 44,5 Teilen Tetrahydrofuran innerhalb 2 Stunden bei einer Temperatur von 22—26° C zutropfen. Nach Beendigung der Zugabe wird das Reaktionsgemisch noch 1 Stunde auf 50° C erwärmt. Zur Auskristallisation des gebildeten Ammoniumchlorides beläßt man die Reaktionsmischung einige Zeit bei 0° C. Das Salz wird abgesaugt und mit Toluol ausgewaschen. Das Filtrat wird nach Abdampfen des Lösungsmittels im Hochvakuum fraktioniert. Das Reaktionsprodukt in Form eines farblosen Öles destilliert bei 185—190°C/0,05 Torr.

Ein analog Beispiel 1 hergestellter Lackfilm, wobei anstelle des Methacrylsäureesters des Glykolsäure-5,6-dihydrodicyclopentadienyl-esters die eben beschriebene Verbindung eingesetzt wurde, zeigte gleiche Trocknungseigenschaften und Härte wie der Lackfilm gemäß Beispiel 1.

## Beispiel 4

### Methacrylsäureester des 4-Hydroxibuttersäure-5,6-dihydrodicyclopentadienylesters

150 Teile 5,6-Dihydrodicyclopentadienol I ($R^1$, $R^2$ = H) werden in 200 Teilen wasserfreiem Toluol vorgelegt. Unter Eiskühlung werden in 1/2 Stunden 141 Teile 4-Chlor-buttersäurechlorid zugetropft. Danach wird bis zum Ende der HCl-Entwicklung zum Rückfluß erhitzt (ca. 11 Stunden). Nach Abdestillation des Lösungsmittels wird das Produkt im Hochvakuum destilliert, Kp. 110—123° C/0,1 Torr; $n_D^{20}$ = 1,5052.

90 Teile des so hergestellten 4-Hydroxibuttersäureesters, 38 Teile Natriummethacrylat, 2,3 Teile Triethylamin und 0,38 Teile Phenothiazin werden 48 Stunden bei 120° C gerührt.

Nach Filtrieren wird destilliert. Man erhält bei 147—151° C/0,2 Torr 78 Teile nahezu farblose Flüssigkeit.

Ein analog Beispiel 1 hergestellter Lackfilm, wobei anstelle des Methacrylsäureesters des Glykolsäure-5,6-dihydrodicyclopentadienyl-esters die eben beschriebene Verbindung eingesetzt wurde, zeigte praktisch gleiche Trocknungseigenschaften bei etwas verringerter Filmhärte.

## Beispiel 5

Nach folgender Rezeptur wurden Klarlacke A und B hergestellt

(1) 23,5 Teile Alkydharz auf Basis Sojaölfettsäure, Ölgehalt 27%, Phthalsäureanhydridgehalt 39%,
(2) 10 Teile Reaktivverdünner,
in Klarlack A: Methacrylsäureester des Glykolsäure-5,6-dihydrodicyclopentadienylesters aus Herstellungsbeispiel 1
in Klarlack B: Methacrylsäureester des Hydroxiethyl-5,6-dihydrodicyclopentadienylesters gemäß US-PS 40 97 677 bzw. DE-OS 28 25 737.
(3) 9,5 Teile Xylol,
(4) 0,28 Teile Co-Octoat-Lsg. mit 6% Metallgehalt,
(5) 1,4 Teile Pb-Octoat-Lsg. mit 24% Metallgehalt,
(6) 0,38 Teile Hautverhinderungsmittel Butanonoxim in 55%iger Lösung in Xylol.

Die Klarlacke A und B wurden mit unterschiedlichen Schichtdicken auf Glasplatten aufgezogen und einer Kabinentrocknung bei 60° C unterworfen. Nach Erreichen der Klebfreiheit wurde das Oberflächenbild optisch geprüft. Die Ergebnisse zeigt Tabelle 1. Runzelbewertung nach folgender Skala: 0 = runzelfrei, 1 = wenige, fein gerunzelte Bereiche, 2 = größere Anteile der Oberfläche fein gerunzelt, 3 = Gesamtfläche fein gerunzelt, 4 = Gesamtfläche grob gerunzelt, 5 = Gesamtfläche sehr grob gerunzelt.

Tabelle 1

| Trockenfilm-schichtdicke | Oberflächenbewertung bei Klarlack A | Klarlack B |
|---|---|---|
| 65 μ | 0 | 5 |
| 55 μ | 0 | 4 |
| 50 μ | 0 | 3 |
| 45 μ | 0 | 1 |
| 40μ | 0 | 0 |

Beispiel 6

Analog Beispiel 5 wurden Klarlacke A und B hergestellt, wobei als Komponente (1) ein Alkydharz auf Basis Sojaölfettsäure, Ölgehalt 48%, Phthalsäureanhydridgehalt 26%, bei sonst gleicher Rezeptur eingesetzt wurde. Die Klarlacke A und B wurden mit unterschiedlichen Schichtdicken auf Glasplatten aufgezogen und einer Kabinentrocknung bei 60° C unterworfen. Nach Erreichen der Klebfreiheit wurde das Oberflächenbild optisch geprüft. Die Ergebnisse zeigt Tabelle 2.

Tabelle 2

| Trockenfilm-schichtdicke | Oberfläche bei Klarlack A | Klarlack B |
|---|---|---|
| 55 μ | 0 | 4 |
| 50 μ | 0 | 3 |
| 45 μ | 0 | 2 |
| 40 μ | 0 | 2 |
| 35μ | 0 | 0 |

Beispiel 7

Analog Beispiel 5 wurden Klarlacke A und B hergestellt mit der Ausnahme, daß in Klarlack A als Komponente (2) der Methacrylsäureester des 4-Hydroxibuttersäure-5,6-dihydrodicyclopentadienylesters aus Herstellungsbeispiel 4 eingesetzt wurde. Die Klarlacke A und B wurden mit 55 μ Trockenfilmschichtdicke auf Glasplatten aufgezogen und einer Kabinentrocknung bei 60° C unterzogen. Das Ergebnis zeigt Tabelle 3.

Beispiel 8

Nach folgender Rezeptur wurden Klarlacke A und B hergestellt.

(1) 23,5 Teile Alkydharz auf Basis Sojaölfettsäure, Ölgehalt 48%, Phthalsäureanhydridgehalt 26%,
(2) 10 Teile Reaktivverdünner,
in Klarlack A: Methacrylsäureester des 4-Hydroxibuttersäure-5,6-dihydrodicyclopentadienylesters aus Herstellungsbeispiel 4,
in Klarlack B: Methacrylsäureester des Hydroxiethyl-5,6-dihydro-dicyclopentadienylethers gemäß US-PS 40 97 677 bzw. DE-OS 28 25 737,
(3) 9,5 Teile Xylol,
(4) 0,28 Teile Co-Octoat-Lsg. (Toluol) mit 6% Metallgehalt,
(5) 1,4 Teile Pb-Octoat-Lsg. (Toluol) mit 24% Metallgehalt und
(6) 0,38 Teile Hautverhinderungsmittel Butanonoxim.

Die Klarlacke A und B wurden mit 50 μ Trockenfilmschichtdicke auf Glasplatten aufgezogen und einer Kabinentrocknung bei 60° C unterzogen. Das Ergebnis zeigt Tabelle 3.

Beispiel 9

Nach folgender Rezeptur wurden Klarlacke A und B hergestellt:

(1) 23,5 Teile Alkydharz auf Basis Leinölfettsäure, Ölgehalt 42%, Phthalsäureanhydridgehalt 27%,
(2) 10 Teile Reaktivverdünner,
Klarlack A: Methacrylsäureester des Glykolsäure-5,6-dihydrodicyclopentadienylesters aus Herstellungsbeispiel 1,
in Klarlack B: Methacrylsäureester des Hydroxiethyl-5,6-dihydrodicyclopentadienylethers gemäß US-PS 40 97 677 bzw. DE-OS 28 25 737,
(3) 9,5 Teile Xylol,
(4) 0,28 Teile Co-Octoat-Lsg. (Toluol) mit 6% Metallgehalt,
(5) 1,4 Teile Pb-Octoat-Lsg. (Toluol) mit 24% Metallgehalt und
(6) 0,38 Teile Hautverhinderungsmittel Butanonoxim.

Die Klarlacke A und B wurden mit 50 μ Trockenfilmschichtdicke auf Glasplatten aufgezogen und einer Kabinentrocknung bei 60° C unterworfen. Das Ergebnis zeigt Tabelle 3.

Beispiel 10

Analog Beispiel 9 wurden Klarlacke A und B hergestellt mit der Ausnahme, daß in Klarlack A als Komponente (2) der Methacrylsäureester des Milchsäure-5,6-dihydrodicyclopentadienyl-esters gemäß Herstellungsbeispiel 3 eingesetzt wurde. Die Klarlacke A und B wurden mit 50 μ Trockenfilmschichtdicke auf Glasplatten aufgezogen und einer Kabinentrocknung bei 60° C unterworfen.

Beispiel 11

Analog Beispiel 5 wurden Klarlacke A und B hergestellt mit der Ausnahme, daß in Klarlack A als Komponente (2) der Methacrylsäureester des 4-Hydroxibuttersäure-5,6-dihydrodicyclopentadienyl-esters gemäß Herstellungsbeispiel 4 eingesetzt wurde. Die Klarlacke A und B wurden mit einer Trockenfilmschichtdicke von 55 μ auf Glasplatten aufgezogen und einer Kabinentrocknung bei 60° C unterworfen. Das Ergebnis zeigt Tabelle 3.

Beispiel 12

Analog Beispiel 5 wurden Klarlacke A und B hergestellt mit der Ausnahme, daß als Komponente (2) in Klarlack A der Methacrylsäureester des Milchsäure-5,6-dihydrodicyclopentadienyl-esters gemäß Herstellungsbeispiel 3 eingesetzt wurde. Die Klarlacke A und B wurden mit einer Trockenfilmschichtdicke von 55 μ auf Glasplatten gezogen und einer Kabinentrocknung bei 60° C unterworfen. Das Ergebnis zeigt Tabelle 3.

Beispiel 13

Analog Beispiel 6 wurden Klarlacke A und B hergestellt mit der Ausnahme, daß als Komponente (2) in Klarlack A der Methacrylsäureester des Milchsäure-5,6-dihydrodicyclopentadienyl-esters gemäß Herstellungsbeispiel 3 eingesetzt wurde. Die Klarlacke A und B wurden mit einer Trockenfilmschichtdicke von 45 μ auf Glasplatten aufgezogen und einer Kabinentrocknung von 60° C unterworfen. Das Ergebnis zeigt Tabelle 3.

Tabelle 3

| Beispiel | Klarlack | Trockenfilm-schichtdicke | Oberflächen-bewertung |
|---|---|---|---|
| 7 | A | 55μ | 0 |
| | B | 55 μ | 5 |
| 8 | A | 50 μ | 3 |
| | B | 50 μ | 5 |
| 9 | A | 50 μ | 4 |
| | B | 50 μ | 5 |
| 10 | A | 50 μ | 2 |
| | B | 50 μ | 5 |
| 11 | A | 50 μ | 3 |
| | B | 50 μ | 5 |
| 12 | A | 55 μ | 0 |
| | B | 55 μ | 5 |
| 13 | A | 45 μ | 0 |
| | B | 45 μ | 4 |

Beispiel 14

352 Teile einer Säure, die laut gaschromatographischer Analyse 96,7% β-Acryloyloxipropionsäure und 3,3% Acrylsäure enthält, werden mit 5 Teilen einer 10%igen Lösung von Bortrifluorid in Tetrahydrofuran versetzt und auf 40° C erhitzt. Dann werden im Verlaufe von 5 Stunden 216 Teile Dicyclopentadien zugegeben, wobei die Temperatur zwischen 50—60° C gehalten wird. Anschließend wird das Reaktionsgemisch 3 Stunden auf 70° C erhitzt. Während der gesamten Dauer der Reaktion wird getrocknete Luft über das Reaktionsgemisch geleitet.

Zur Verhinderung einer vorzeitigen Polymerisation enthält das Reaktionsgemisch außerdem 0,051 Teile Hydrochinonmonomethylether. Nach Beendigung der Umsetzung wird das Reaktionsgemisch abgekühlt und mit 160 Teilen Petrolether (Kp. 70—80° C) versetzt. Die Petrolether-Lösung wird sodann 3mal mit je 1000 Teilen Wasser ausgeschüttelt. Anschließend wird die Lösung über Natriumsulfat getrocknet. Das Lösungsmittel wird abdestilliert. 396 Teile anfallender Rohester werden im Hochvakuum fraktioniert. Ausbeute: 250 Teile β-Acryloyloxipropionsäureester des 5,6-Dihydrodicyclopentadienols.

100 Teile eines Umsetzungsprodukts aus 3002 Teilen Isophorondiisocyanat, 1256 Teilen 2-Hydroxiethylacrylat, 3027 Teilen eines ethoxilierten Trimethylolpropans (Hydroxyzahl 250), 215 Teilen Thiodiglykol und 2500 Teilen Hexandiol-1,6-bisacrylat wurden zusammen mit 7,5 Teilen Benzyldimethylketal in 55 Teilen der nachfolgend aufgeführten Reaktivverdünner gelöst:

| | |
|---|---|
| I (Vergleich) | — Ethyldiglykolacrylat |
| II (Vergleich) | — Ethylglykolacrylat |
| III (Vergleich) | — 2-Ethyl-2-hydroximethyl-dioxan-1,3-acrylat |
| IV (Vergleich) | — Acrylsäureester des Ethylenglykolmono-dihydrodicyclopentadienylethers gemäß DE-OS 28 25 627 |
| V (erfindungsgemäß) | — β-Acryloyloxipropionsäureester des 5,6-Dihydrodicyclopentadienols |

Aus den oben beschriebenen Massen werden Filme mit einer Naßfilmdicke von 70—80 mμ auf Glasplatten gezogen. Diese Filme werden mittels eines UV-Strahlers bei zweimaligem Durchlauf mit einer Geschwindigkeit von 5 m/Min. ausgehärtet. Nach Ablösung der Filme von der Glasplatte werden die charakteristischen mechanischen Eigenschaften bestimmt. Diese Eigenschaften sind in der nachfolgenden Tabelle aufgeführt.

| | I | II | III | IV | V |
|---|---|---|---|---|---|
| Reißdehnung [%] | 12,20 | 12,05 | 26,26 | 24,04 | 28,67 |
| Reißfestigkeit [MRa] | 2,41 | 2,42 | 18,65 | 12,15 | 23,91 |
| Eindringtiefe [μm] | 17,2 | 21,3 | 16,9 | 18,0 | 11,1 |
| Rückstellung nach 30 sec [μm] | 1,3 | 0,2 | 7,8 | 8,2 | 5,5 |
| Stempelprüfung | f.0 | f.0 | 0 | 0 | 0 |
| Abrieb CS 17 ∅ 100 Zyklen | 0,56 | —*) | 0,57 | 0,45 | 0,37 |

*) Zu weich, Messung nicht möglich.

Erläuterungen zu den Meßwerten

1. Rückstellung

Die Rückstellungsprüfung wurde im WALLACE Micro-Indentation-Tester gemäß Brit. Standard 903, Teil A 26 und ASTM D 1415 ausgeführt. Zunächst wurde nach Vorschrift die Eindringtiefe bestimmt (mit Vickers Pyramide, ∢ 136°, 10 g Belastung, 30 sec Einwirkzeit). Dann wurde die Belastung entfernt. Nach weiteren 30 sec wurde die Rückstellung abgelesen. Sie ist die verbliebene Eindringtiefe und wird als charakteristisches Maß für die plastische Verformbarkeit und die Rückstellkräfte des Prüffilms angesehen.

2. Abrieb

Die Abriebprüfung wurde mit dem Taber-Abraser-Gerät in Anlehnung an DIN 53 754, jedoch mit Reibrolle CS 17 (Herstellung: Erichsen, BR Deutschland) durchgeführt.

Aus den Daten der Tabelle ist zu ersehen, daß die erfindungsgemäß hergestellte Folie gegenüber den gemäß dem Stand der Technik hergestellten Folien verbesserte Reißdehnung und Reißfestigkeit bei vermindertem Abrieb besitzt.

**Patentansprüche**

1. Verwendung von Verbindungen der Formel

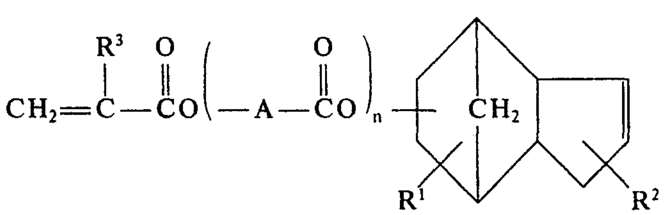

(II)

worin

$R^1$, $R^2$, $R^3$ ein Wasserstoffatom oder eine Methylgruppe,
A einen gegebenenfalls verzweigten Alkylenrest mit 1 bis 17 C-Atomen oder einen gegebenenfalls verzweigten Alkenylenrest mit 2 bis 17 C-Atomen und
n eine ganze Zahl von 1 bis 5 bedeuten,

als Reaktivverdünner für radikalisch polymerisierbare Lacksysteme.

2. Verbindungen der Formel

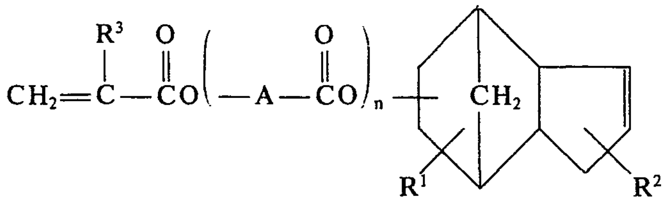

(II)

worin

R[1], R[2], R[3] ein Wasserstoffatom oder eine Methylgruppe,
A einen gegebenenfalls verzweigten Alkylenrest mit 1 bis 17 C-Atomen oder einen gegebenenfalls verzweigten Alkenylenrest mit 2 bis 17 C-Atomen und
n eine ganze Zahl von 1 bis 5 bedeuten mit der Maßgabe, daß nicht gleichzeitig A

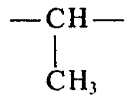

und n 1 bedeuten.

3. Verbindungen nach Anspruch 2, dadurch gekennzeichnet, daß A für $(CH_2)_x$ steht, wobei x eine ganze Zahl von 1 bis 17 bedeutet.

4. Verbindungen nach Ansprüchen 2 und 3, dadurch gekennzeichnet, daß A aus der Gruppe bestehend aus

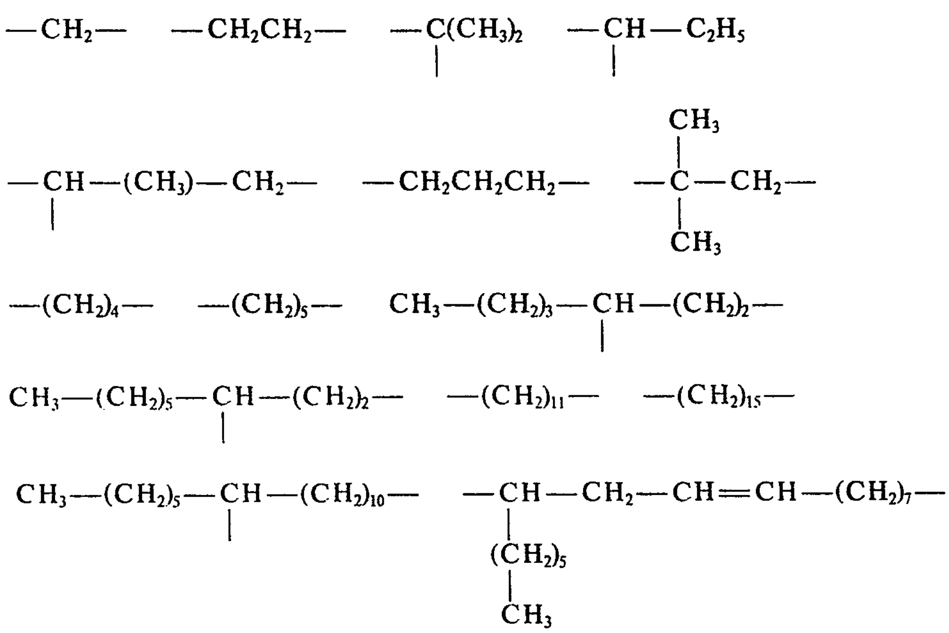

ausgewählt ist.

5. Verbindungen nach Ansprüchen 2–4, dadurch gekennzeichnet, daß n eine ganze Zahl von 1 bis 3 bedeutet.

6. Verbindungen nach Ansprüchen 2–5, dadurch gekennzeichnet, daß n für 1 steht.

7. Verfahren zur Herstellung von Verbindungen der Formel

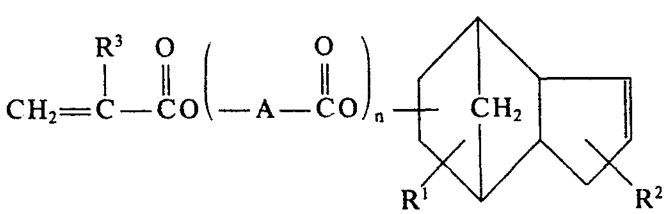

(II)

worin

R[1], R[2], R[3] ein Wasserstoffatom oder eine Methylgruppe,

A einen gegebenenfalls verzweigten Alkylenrest mit 1 bis 17 C-Atomen oder einen gegebenenfalls verzweigten Alkenylenrest mit 2 bis 17 C-Atomen und

n eine ganze Zahl von 1 bis 5 bedeuten mit der Maßgabe, daß nicht gleichzeitig A

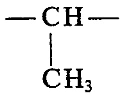

und n 1 bedeuten,

dadurch gekennzeichnet, daß man entweder

a) Acryl- bzw. Methacrylsäure, ihre Alkalisalze, Chloride oder Methylester mit Estern der Formel

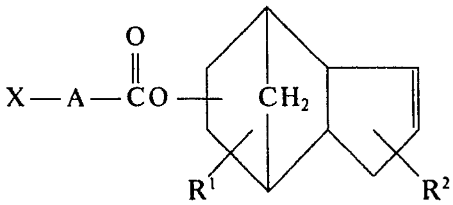

(XI)

worin

$R^1$, $R^2$ und A die oben angegebene Bedeutung haben und
X für OH oder Halogen, vorzugsweise Chlor, steht, oder

b) Acryl- bzw. Methacrylsäureester der Formel

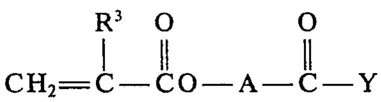

(XII)

worin

$R^3$ und A die oben angegebene Bedeutung haben und
Y für OH, $OCH_3$ oder Halogen, vorzugsweise Chlor steht,

mit dem 5,6-Dihydrodicyclopentadienol (I) oder

c) Acryl- bzw. Methacrylsäureester der Formel

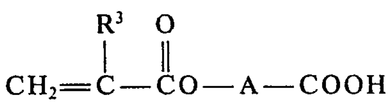

(XIII)

worin $R^3$ und A die oben angegebene Bedeutung haben,
mit einem Dicyclopentadien der Formel

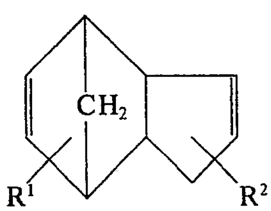

(XIV)

umsetzt.

**Claims**

1. The use of compounds corresponding to the following formula

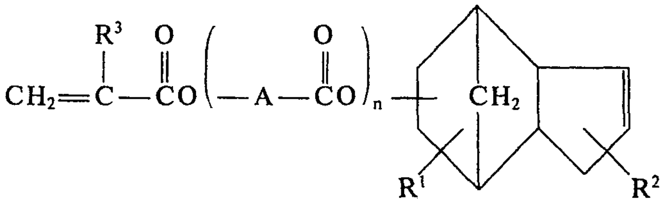

(II)

in which

$R^1$, $R^2$, $R^3$ represent a hydrogen atom or a methyl group,
A represents an optionally branched alkylene radical containing from 1 to 17 C-atoms or an optionally branched alkenylene radical containing from 2 to 17 C-atoms and
n is an integer of from 1 to 5,

as reactive thinners for radically polymerizable lacquer systems.

2. Compounds corresponding to the following formula

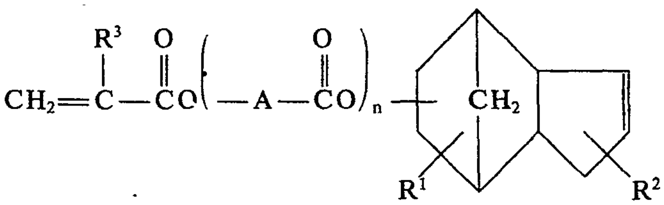

(II)

in which

$R^1$, $R^2$, $R^3$ represent a hydrogen atom or a methyl group,
A represents an optionally branched alkylene radical containing from 1 to 17 C-atoms or an optionally branched alkenylene radical containing from 2 to 17 C-atoms and
n is an integer of from 1 to 5, with the proviso that A cannot represent

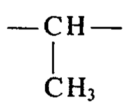

where n is 1.

3. Compounds as claimed in Claim 2, characterized in that A represents $(CH_2)_x$, x being an integer of from 1 to 17.

4. Compounds as claimed in Claims 2 and 3, characterized in that A is selected from the group comprising

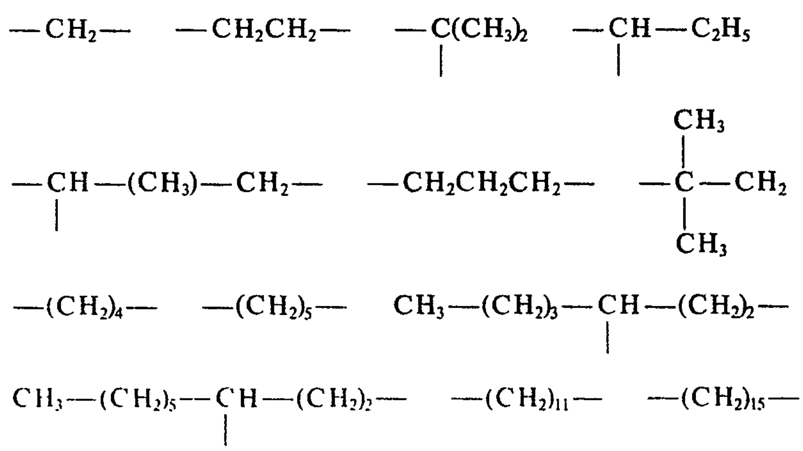

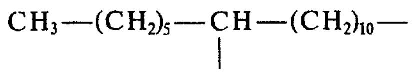 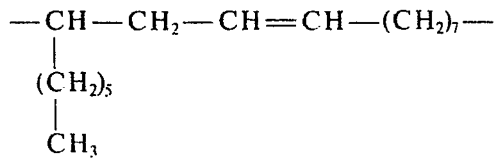

5. Compounds as claimed in Claims 2 to 4, characterized in that n is an integer of from 1 to 3.

6. Compounds as claimed in Claims 2 to 5, characterized in that n = 1.

7. A process for the production of compounds corresponding to the following formula

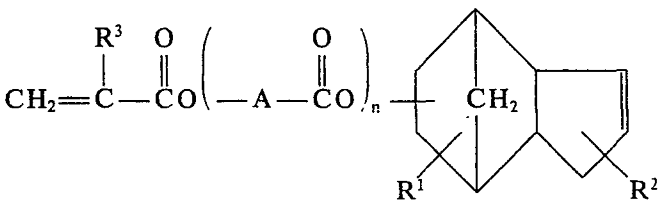

(II)

in which

$R^1$, $R^2$, $R^3$ represent a hydrogen atom or a methyl group,

A represents an optionally branched alkylene radical containing from 1 to 17 C-atoms or an optionally branched alkenylene radical containing from 2 to 17 C-atoms and

n is an integer of from 1 to 5, with the proviso that A connot represent

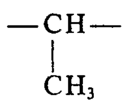

where n is 1,

characterized in that either

a) acrylic or methacrylic acid, their alkali salts, chlorides or methyl esters are reacted with esters corresponding to the following formula

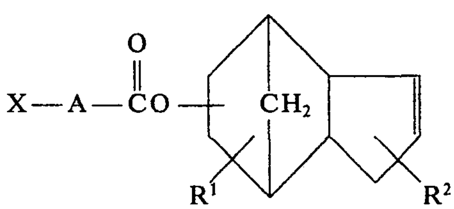

(XI)

in which

$R^1$, $R^2$ and A are as defined above and

X represents OH or halogen, preferably chlorine, or

b) acrylic or methacrylic acid esters corresponding to the following formula

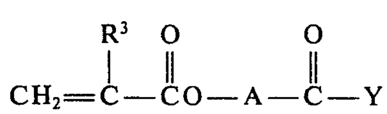

(XII)

in which

$R^3$ and A are as defined above and

Y represents OH, $OCH_3$ or halogen, preferably chlorine,

are reacted with the 5,6-dihydrodicyclopentadienol of formula (I) or

c) acrylic or methacrylic acid esters corresponding to the following formula

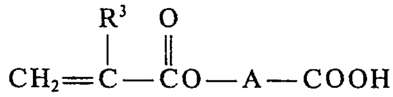

(XIII)

in which
$R^3$ and A are as defined above,
are reacted with a dicyclopentadiene corresponding to the following formula

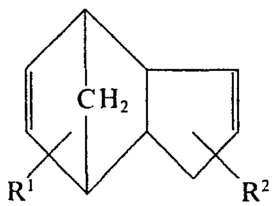

(XIV)

**Revendications**

1. Utilisation des composés de formule

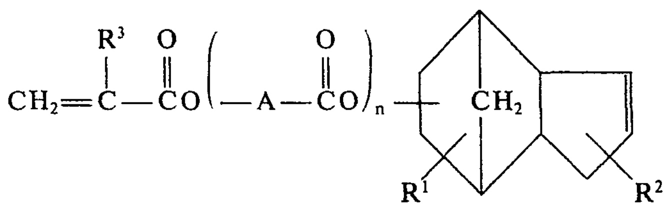

(II)

dans laquelle

$R^1$, $R^2$, $R^3$ représentent un atome d'hydrogène ou un groupe méthyle,
A représente un reste alkylène éventuellement ramifié en C 1–C 17 ou un reste alcénylène éventuellement ramifié en C 2–C 17, et est un nombre entier de 1 à 5,
n est un nombre entier de 1 à 5,

en tant que diluants réactifs pour des systèmes de vernis polymérisables sous l'action de radicaux libres.

2. Composés de formule

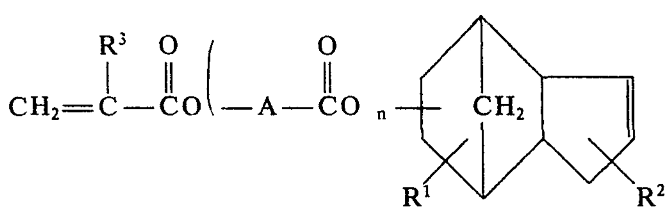

(II)

dans laquelle

$R^1$, $R^2$, $R^3$ représentent un atome d'hydrogène ou un groupe méthyle,
A représente un reste alkylène éventuellement ramifié en C 1–C 17 ou un reste alcénylène éventuellement ramifié en C 2–C 17, et
n est un nombre entier de 1 à 5,
à l'exception des composés dans lesquels, simultanément, A représente

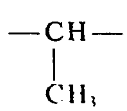

et n = 1.

3. Composés selon la revendication 2, caractérisés en ce que A représente $(CH_2)_x$, x étant un nombre entier de 1 à 17.

4. Composés selon les revendications 2 et 3, caractérisés en ce que A est choisi dans le groupe consistant en:

$-CH_2-$ $\quad -CH_2CH_2-$ $\quad -C(CH_3)_2$ (with a vertical bond) $\quad -CH-C_2H_5$ (with a vertical bond)

$-CH-(CH_3)-CH_2-$ (with a vertical bond) $\quad -CH_2CH_2CH_2-$ $\quad$

$CH_3$
$-C-CH_2-$
$CH_3$

$-(CH_2)_4-$ $\quad -(CH_2)_5-$ $\quad CH_3-(CH_2)_3-CH-(CH_2)_2-$ (with a vertical bond)

$CH_3-(CH_2)_5-CH-(CH_2)_2-$ (with a vertical bond) $\quad -(CH_2)_{11}-$ $\quad -(CH_2)_{15}-$

$CH_3-(CH_2)_5-CH-(CH_2)_{10}-$ (with a vertical bond) $\quad -CH-CH_2-CH=CH-(CH_2)_7-$
$(CH_2)_5$
$CH_3$

5. Composés selon les revendications 2 à 4, caractérisés en ce que n est un nombre entier de 1 à 3.
6. Composés selon les revendications 2 à 5, caractérisés en ce que n est égal à 1.
7. Procédé de préparation des composés de formule

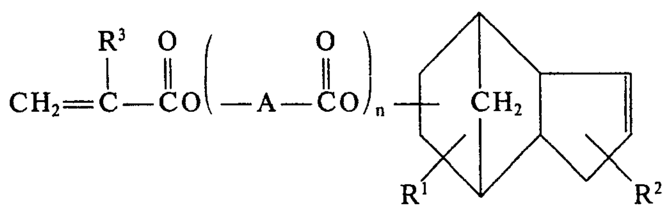

(II)

dans laquelle

$R^1$, $R^2$, $R^3$ représentent un atome d'hydrogène ou un groupe méthyle,
A représente un reste alkylène éventuellement ramifié en C 1—C 17 ou un reste alcényle éventuellement ramifié en C 2—C 17, et
n est un nombre entier de l à 5,
à l'exception des composés dans lesquels, simultanément, A représente

$-CH-$
$CH_3$

et n est égal à 1,

caractérisé en ce que:

a) on fait réagir l'acide acrylique ou méthacrylique, leurs sels alcalins, chlorures ou esters méthyliques avec des esters de formule

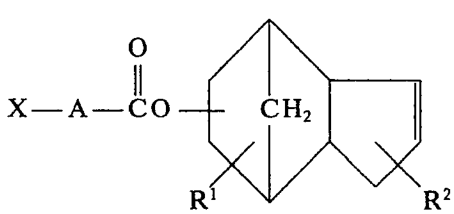

(XI)

dans laquelle

$R^1$, $R^2$ et A ont les significations indiquées ci-dessus, et
X représente OH ou un halogène, de préférence le chlore, ou bien

b) on fait réagir des esters acryliques ou méthacryliques de formule

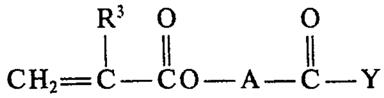

(XII)

dans laquelle

$R^3$ et A ont les significations indiquées ci-dessus, et
Y représente OH, $OCH_3$ ou un halogène, de préférence le chlore,

avec le 5,6-dihydrodicyclopentadiénol I ou bien

c) on fait réagir des esters acryliques ou méthacryliques de formule

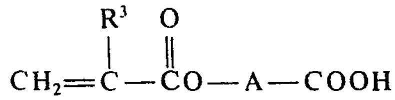

(XIII)

dans laquelle $R^3$ et A ont les significations indiquées ci-dessus, avec un dicyclopentadiène de formule

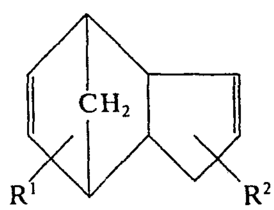

(XIV)